# EUROPÄISCHE PATENTSCHRIFT

(11) **EP 1 260 682 B1**
(45) Veröffentlichungstag und Bekanntmachung des Hinweises auf die Patenterteilung: **28.04.2004**
(21) Anmeldenummer: 02006843.3
(22) Anmeldetag: 26.03.2002
(51) Int. Cl.: F01N 1/08, F01N 7/02, F01N 3/023, F01N 3/28, B01D 53/94

(54) **Abgasstrang einer Brennkraftmaschine, insbesondere Dieselmotor eines Nutzfahrzeuges wie Lastkraftwagen oder Omnibus, mit integrierten Abgasnachbehandlungs- und Schalldämpfungsvorrichtungen**
Exhaust line of an internal engine, especially diesel engine from utility vehicules such as trucks or buses, with an integrated device for treating an exhaust gas an attenuate noise
Ligne d'échappement d'un moteur à combustion interne, plus particulièrement d'un moteur diesel d'un véhicule utilitaire tel qu'un poids lourd ou un bus, comportant un dispositif de traitement des gaz d'échappement et d'insonorisation intégré

(30) Priorität: 14.05.2001 DE 10123359
(43) Veröffentlichungstag der Anmeldung: 27.11.2002
(73) Patentinhaber: MAN Nutzfahrzeuge Aktiengesellschaft, 80976 München (DE); ROTH-TECHNIK AUSTRIA Gesellschaft m.b.H., 3193 St. Aegyd/Neuwalde (AT)
(72) Erfinder: Jacob, Eberhard, Dr., 82152 Krailling (DE); Mai, Hans-Peter, 76456 Kuppenheim (DE)

(56) Entgegenhaltungen:
- EP-A- 0 484 925
- EP-A- 0 555 746
- EP-A- 1 096 116
- WO-A-92/18226

## Beschreibung

Die Erfindung betrifft einen Abgasstrang einer Brennkraftmaschine, insbesondere Dieselmotor eines Nutzfahrzeuges wie Lastkraftwagen oder Omnibus, mit integrierten Abgasnachbehandlungs- und Schalldämpfungsvorrichtungen.

Auf dem 21. Internationalen Wiener Motorensymposium am 04./05. Mai 2000 (siehe auch Fortschrittsberichte VDI Reihe 12, Nr. 420, Band 2 (2000), Seiten 311-329) wurde von Dr. E. Jacob und Dipl.-Ing. A. Döring, beide MAN Nutzfahrzeuge AG, Nürnberg, über verschiedene Abgasnachbehandlungssysteme referiert und dabei auch verschiedene mit Schalldämpfem kombinierte Abgasnachbehandlungssysteme erläutert sowie bildhaft darstellt. Ein erstes GD-Kat-Modulsystem umfasst extern eines Hauptschalldämpfers für ein Nutzfahrzeug einen Vorkatalysator und einen Hydrolysekatalysator in einer vom Fahrzeugmotor kommenden Abgasleitung. Innerhalb des Hauptschalldämpfers sind in modularer Anordnung fünf aus je einem SCR-Katalysator und einem Ammoniaksperrkatalysator bestehende Kat-Module angeordnet, wobei das über die Abgasleitung in den Einströmraum des Hauptschalldämpfers eingeleitete, im Vor- und Hydrolysekatalysator schon aufbereitete Abgas bei Durchströmung der Kat-Module gereinigt wird und dann in einen Austrittsraum gelangt. Aus diesem Austrittsraum wird das gereinigte Abgas über ein hauptschalldämpferinternes, vergleichsweise langes Endrohr, das zumindest partiell mit schallabsorbierendem Material ausgekleidet oder umgeben ist, aus dem Hauptschalldämpfer ausgeleitet und gelangt nach Durchströmen eines mehr oder weniger langen Auslassstutzens in die Atmosphäre.

Bei einem weiteren, aus der EP 1096116 A2, dort Fig. 3 und 4 bekannten GD-Kat-Modulsystem ist der Hydrolysekatalysator in den Innenraum des Hauptschalldämpfers integriert, in dem daneben auch noch vier SCR-Kat-Module untergebracht sind, wobei an jedem derselben sich ein Ammoniaksperrkat anschließt. Das Abgas wird nach Durchströmen des Hydrolysekats in eine hintere Einströmkammer eingespeist, durchströmt dann die SCR- und NH₃-Sperrkats von hinten nach vorne und gelangt dann in eine vordere Ausströmkammer. Aus dieser wird das gereinigte Abgas über ein vergleichsweise langes Auspuffendrohr abgeführt. Dieses geht über einen Nachschalldämpfer, der vergleichsweise viel Platz an einer Stelle beansprucht, an der ohnehin beengte Einbauverhältnisse vorherrschen. Das Auspuffendrohr verlängert den Hauptschalldämpfer und erhöht damit auch dessen Herstellkosten. Akustisch im Sinne einer Schalldämpfung aktive Einbauten im Abgasweg stromabwärts der SCR-/Ammoniaksperrkatalysatoren rufen in der Regel einen mehr oder weniger starken Druckverlust hervor, der an sich vermieden werden sollte. Aus diesem Grund nimmt neben der Entwicklung der Abgasnachbehandlungskomponenten auch die Weiterentwicklung der Abgasschalldämpfung einen bedeutenden Stellenwert ein. Der Abgasschalldämpfung liegt die Theorie zugrunde, den/die Schalldämpfer und das Endrohr als akustisches Feder-Masse-System zu betrachten und aufeinander abzustimmen, wobei das Volumen die akustische Feder und das Endrohr die Masse darstellt. In der Praxis wird aber die Volumengröße und - platzierung in der Regel auf das anwendungsmäßige Fahrzeug bezogen festgelegt und durch optimale Auslegung des Durchmessers und der Länge des Endrohres das gewünschte Dämpfungsverhalten erreicht. Dieses führt aber in vielen Fällen zu erheblichen Einbauproblemen, insbesondere bei Seitenlageneinbau in Lastkraftwagen. Die Bestrebungen gingen bisher dahin, das Endrohr in zunehmendem Maß in den Hauptschalldämpfer zu integrieren. Letzteres führt jedoch in diesem zu einem Dämpfungsvolumenverlust, was sich wiederum im Dämpfungspotential und Rückdruckverhalten negativ bemerkbar macht. Ferner bewirkt die Verlagerung des Endrohres in größerem Umfang in den Hauptschalldämpferinnenraum, dass dort der für die Unterbringung der Abgasnachbehandlungsmodule notwendige Raum verkleinert wird, bzw. das Hauptschalldämpfervolumen insgesamt vergrößert werden muss. Letzteres wiederum ist in einem Lastkraftwagen oder Omnibus nur begrenzt möglich. Außerdem führen alle derzeit üblichen und bekannten Endrohrvarianten infolge Drosselung und Reibung zu einem Druckverlust und somit zu einem negativen Gegendruckverhalten im Abgas.

Es ist daher Aufgabe der Erfindung, für einen Abgasstrang einer Brennkraftmaschine, insbesondere Dieselmotor eines Nutzfahrzeuges wie Lastkraftwagen oder Omnibus, eine solche Ausgestaltung und Anordnung der Abgasnachbehandlungs- und Schalldämpfungsvorrichtungen zu schaffen, dass den Nachteilen, die bekannten Lösungen anhaften, abgeholfen werden kann.

Diese Aufgabe ist bei einem Abgasstrang der gattungsgemäßen Art erfindungsgemäß entsprechend den kennzeichnenden Merkmalen des Anspruchs 1 durch folgende Merkmale gelöst,
- einen Hauptschalldämpfer, der außen durch eine vordere Stirnwand, eine hintere Stirnwand und eine Umfangsaußenwand begrenzt sowie innen durch eine Wand in eine Einströmkammer und eine Ausströmkammer unterteilt ist und in den mehrere parallel durchströmbare, einerseits mit der Einströmkammer, andererseits mit der Ausströmkammer kommunizierende Abgasnachbehandlungsmodule eingebaut sind, die innerhalb ihrer Gehäuse jeweils einen SCR-Katalysator, gegebenenfalls auch einen nachfolgenden Ammoniaksperrkatalysator aufweisen,
- der Hauptschalldämpfer ist endrohrlos ausgebildet und weist an seiner abgasaustrittsseitigen Stirnwand und/oder dem abgasaustrittsseitigen Endbereich seiner Umfangsaußenwand oder einem für Abgasauslass vorgesehenen Bereich seiner abgaseintrittsseitigen Stirnwand eine oder mehrere für einen direkten, endrohrlosen Auslass des gereinigten Abgases aus der Ausströmkammer in die Atmosphäre entsprechend gestaltete Auslassöffnung(en) auf,
- der Hauptschalldämpfer ist auf ein Teilschalldämpfungsvolumen ausgelegt und das im Hauptschalldämpfer fehlende Schalldämpfungsvolumen ist in einem Vorschalldämpfer realisiert, der beabstandet zum Hauptschalldämpfer möglichst motomah in die Abgasleitung eingebaut ist,
- in den Vorschalldämpfer ist wenigstens ein den NO₂-Anteil des Stickoxids im Abgas signifikant erhöhender Oxidationskatalysator eingebaut,
- einen Hydrolysekatalysator, der entweder
   a) in den Vorschalldämpfer, dort parallel zu dem/den Oxidationskatalysator(en), oder
   b) in einen zwischen Vor- und Hauptschalldämpfer liegenden Abschnitt der Abgasleitung, oder
   c) in den Hauptschalldämpfer, dort strömungsmäßig in die Einströmkammer ausmündend,
eingebaut ist, wobei in das Abgas kurz vor dem Hydrolysekatalysator ein von einer Dosiereinrichtung bereitgestelltes Reduktionsmittel, wie Hamstoffpartikel oder eine Hamstoff-Wasser-Lösung, eindüsbar ist.

Einer der Hauptvorteile der erfindungsgemäßen Lösung ist darin begründet, dass das bisher notwendige Endrohr entfällt und ein Hauptschalldämpfer geschaffen ist, in dessen Innenraum hinreichend Platz für die Unterbringung einer auch größeren Anzahl von Abgasnachbehandlungsmodulen sowie schalldämmender Ein- bzw. Anbauten vorhanden ist. Durch die Aufteilung des Schalldämpfungsvolumens auf den Hauptschalldämpfer und den Vorschalldämpfer ergibt sich eine günstigere Einbaumöglichkeit für die Abgasanlage, denn der endrohrlose Hauptschalldämpfer hat nicht die Größe wie ein bisher notwendiger Schalldämpfer mit Endrohr. Eine platzsparende Bauweise wird mit der Erfindung auch dadurch erreicht, dass zumindest die Oxidationskatalysatoren in den Vorschalldämpfer eingebaut sind, für deren Unterbringung also nicht weiterer Raum außerhalb des Vorschalldämpfers beansprucht wird.

Nachstehend ist die erfindungsgemäße Lösung anhand mehrerer in der Zeichnung dargestellter Ausführungsbeispiele noch näher erläutert. In der Zeichnung zeigen jene Zeichnungsseiten mit je einem Figurenpaar 1-2, 3-4, 5-6, 7-8, 9-10, 11-12, 13-14, 15-16, 17-18, 19-20 jeweils ein Ausführungsbeispiel eines erfindungsgemäßen Abgasstranges. Dabei zeigen die ungeradzahligen Figuren diesen im Längsschnitt. Die Figuren 2, 4, 6, 8 zeigen den Hauptschalldämpfer des jeweiligen Abgasstranges auf seiner Abgasaustrittsseite. Die Figuren 10, 12, 14, 16, 18, 20 zeigen einen Querschnitt durch den Abgasstrang des betreffenden Beispiels entlang der römisch-zahlig angegebenen Schnittlinie in der zugeordneten ungeradzahligen Figur. Die Figuren 21 und 22 zeigen ein Ausführungsbeispiel für einen Vorschalldämpfer mit integrierten Katalysatoren im Längs- bzw. Querschnitt. Figur 23 zeigt ein weiteres Ausführungsbeispiel eines Vorschalldämpfers mit integrierten Katalysatoren.

In den Figuren sind gleiche bzw. einander entsprechende Bauteile mit gleichen Bezugszeichen angezogen.

In den Figuren ist ein Ausschnitt aus einem Abgasstrang einer Brennkraftmaschine, insbesondere eines Dieselmotors eines Nutzfahrzeuges wie Lastkraftwagen oder Omnibus gezeigt. Der Abgasstrang beginnt mit Auspuffkanälen, die zylinderkopfseitig angeflanscht sind und in eine oder mehrere Sammelleitung(en) ausmünden, die entweder direkt oder über Auspuffkrümmer an einer Abgasturbine eines ein- oder mehrstufigen Abgasturboladeraggregates angeschlossen sind. Am Abgasauslass dieses Abgasturboladeraggregates schließt sich eine mehrteilige Abgasleitung 1 an, in die Abgasnachbehandlungs- und Schalldämpfungsvorrichtungen in erfindungsgemäßer Art integriert sind.

Entsprechend der Erfindung ist ein Hauptschalldämpfer 2 vorgesehen, der außen durch eine vordere Stirnwand 3, eine hintere Stirnwand 4 und eine.Umfangsaußenwand 5 begrenzt sowie innen durch eine Wand 6 in eine Einströmkammer 7 und eine Ausströmkammer 8 unterteilt ist. In den Innenraum des Hauptschalldämpfers 2 sind mehrere parallel durchströmbare, einerseits mit der Einströmkammer 7, andererseits mit der Ausströmkammer 8 kommunizierende Abgasnachbehandlungsmodule 9 lagestabil eingebaut. Diese Abgasnachbehandlungsmodule 9 weisen in ihren Gehäusen 10 jeweils einen SCR-Katalysator 11 und - soweit für die Abgasentgiftung notwendig - einen dem SCR-Katalysator 11 nachfolgenden Ammoniaksperrkatalysator 12 auf.

Einem weiteren Merkmal der Erfindung entsprechend ist der Hauptschalldämpfer 2 endrohrlos ausgebildet und weist an seiner abgasaustrittsseitigen Stirnwand 4 und/oder dem abgasaustrittsseitigen Endbereich seiner Umfangsaußenwand 5 oder einem für Abgasauslass vorgesehenen Bereich 33 seiner abgaseintrittseitigen Stirnwand 3 eine oder mehrere für einen direkten, endrohrlosen Auslass des gereinigten Abgases aus der Ausströmkammer 8 in die Atmosphäre entsprechend gestaltete Auslassöffnung(en) 13 auf.

Einem weiteren Merkmal der Erfindung entsprechend ist der Hauptschalldämpfer 2 nur auf ein Teilschalldämpfungsvolumen ausgelegt und das im Hauptschalldämpfer 2 fehlende Schalldämpfungsvolumen ist in einem Vorschalldämpfer 14 realisiert. Dieser ist beabstandet zum Hauptschalldämpfer möglichst motornah in die Abgasleitung 1 eingebaut.

Entsprechend der Erfindung ist in den Vorschalldämpfer 14 wenigstens ein Oxidationskatalysator 15 eingebaut, der den NO₂-Anteil des Stickoxides im Abgas signifikant erhöht.

Des weiteren ist erfindungsgemäß im Abgasstrang ein Hydrolysekatalysator 16 vorgesehen. Dieser kann dabei entweder
a) in den Vorschalldämpfer 14, dort parallel zu dem/den Oxidationskatalysator(en) 15, oder
b) in einen zwischen Vorschalldämpfer 14 und Hauptschalldämpfer 2 gegebenen Abschnitt 1/1 der Abgasleitung 1, oder
c) in den Hauptschalldämpfer 2, dort strömungsmäßig in die Einströmkammer 7 ausmündend,
eingebaut sein. In das Abgas ist stromauf kurz vor dem Hydrolysekatalysator 16 ein Reduktionsmittel, z. B. Harnstoffpartikel oder eine Harnstoff-Wasser-Lösung, eindüsbar, das mittels einer Dosiereinrichtung 17 zeit- und mengenmäßig passend bereitgestellt und über eine spezielle Düse 18 in das Abgas eingespeist wird. Dem Hydrolysekatalysator 16 ist innerhalb des ihn aufnehmenden Gehäuses 19 ein gleichzeitig auch als Strömungsmischer wirkender Verdampfer 20 unmittelbar vorgeschaltet, der die Umwandlung des in das Abgas eingedüsten Reduktionsmittels in gasförmigen Aggregatzustand und eine günstige Vermischung mit dem Abgas bewirkt.

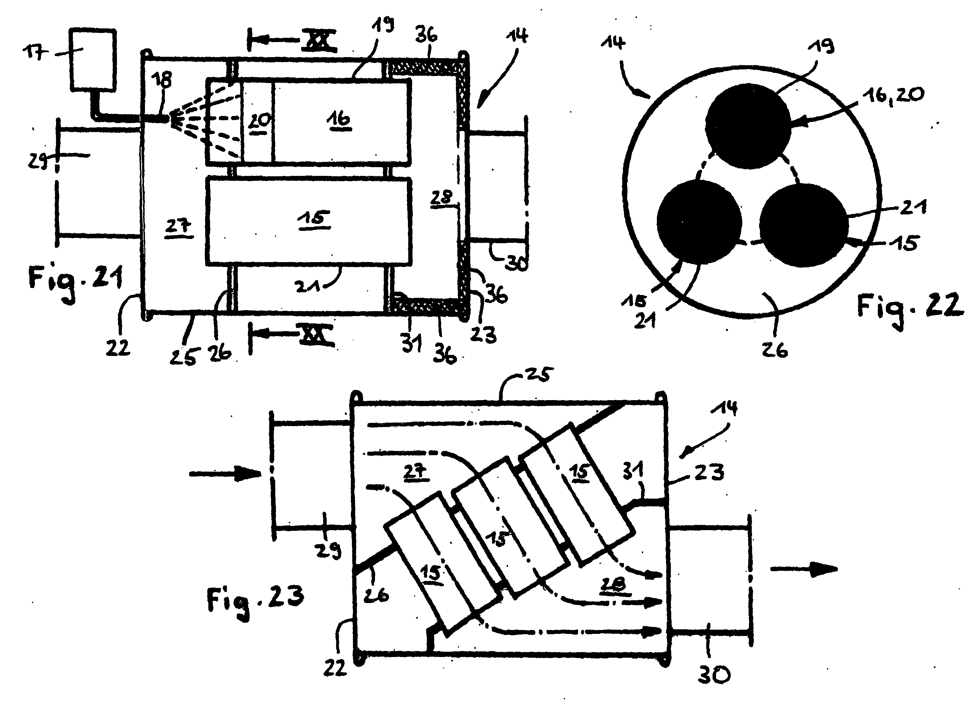

Ein Beispiel für den Einbaufall a) des Hydrolysekatalysators 16 zeigen die Fig. 21 und 22. Dort sind zwei Oxidationskatalysatoren 15 mit einem Hydrolysekatalysator 16 kombiniert in den Vorschalldämpfer 14 eingebaut, und zwar achsparallel zu dessen Längsachse und zueinander sowie derart, dass zwischen den Stirnseiten der zylindrischen Gehäuse 21 der Vor-Katalysatoren 15 sowie den Stirnseiten des zylindrischen Gehäuses 19 des Hydrolysekatalysators 16 und der jeweils benachbarten Stirnwand 22 bzw. 23 des Vorschalldämpfers 14 ein bestimmter Abstand verbleibt.

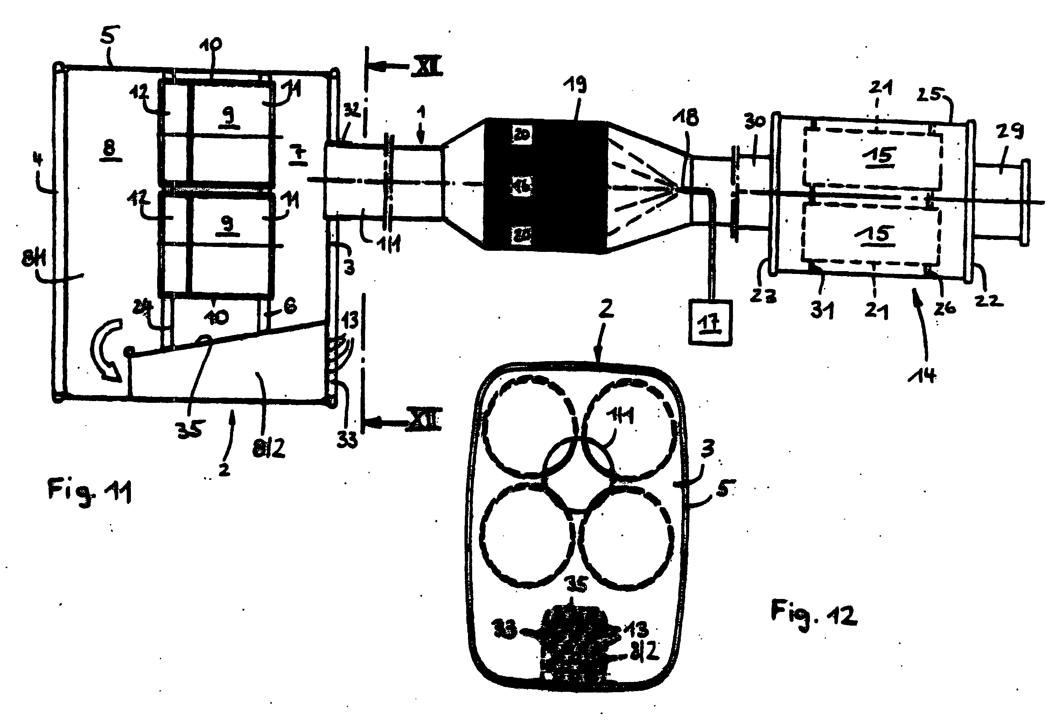

Ein Beispiel für den Einbaufall b) des Hydrolysekatalysators 16 zeigt Fig. 11. Dort ist der Hydrolysekatalysator 16 zusammen mit dem Verdampfer 20 mit seinem Gehäuse 19 in ein Abgasleitungsteilstück 1/1 eingebaut, das zwischen dem Vorschalldämpfer 14 und dem Hauptschalldämpfer 2 gegeben ist. In diesem Fall sind in den Vorschalldämpfer 14 nur ein oder mehrere Oxidationskatalysatoren 15 eingebaut.

Ein Beispiel für den Einbaufall c) des Hydrolysekatalysators 16 zeigt Fig. 19. Hieraus ist ersichtlich, dass der Hydrolysekatalysator 16 zusammen mit dem Verdampfer 20 in seinem Gehäuse 19 in den Hauptschalldämpfer 2 eingebaut ist, dort strömungsmäßig in die Einströmkammer 7 ausmündet und ebenso wie die Abgasnachbehandlungsmodule 9 durch die Zwischenwand 6 und gegebenenfalls eine weitere, hierzu parallel beabstandete, aber nicht gasdichte Wand 24 lagestabil in Einbaulage gehalten ist. In diesem Fall sind in den Vorschalldämpfer 14 nur ein oder mehrere Oxidationskatalysatoren 15 eingebaut.

Nachstehend ist auf verschiedene weitere Details von Ausführungsbeispielen für den Vorschalldämpfer 14 näher eingegangen. Wie alle Figuren zeigen, ist der Vorschalldämpfer 14 außen durch eine vordere, abgaseintrittsseitige Stirnwand 22, eine hierzu parallele hintere, abgasaustrittsseitige Stirnwand 23 und eine zylindrische Umfangswand 25 begrenzt. Der Innenraum dieses etwa tonnenförmigen Vorschalldämpfers 14 ist durch eine gasdichte Zwischenwand 26 in eine Einströmkammer 27 und eine Ausströmkammer 28 unterteilt. In die Einströmkammer 27 mündet ein an der abgaseintrittsseitigen Stirnwand 22 angeschlossener Rohrstutzen 29 aus, an dem entweder eine an der Brennkraftmaschine angeschlossene Abgassammelleitung oder ein an letzterer angeschlossener Abgaskrümmer oder der Auslassstutzen einer Abgasturbine eines ein- oder mehrstufigen Abgasturboladeaggregates oder ein an letztere angeschlossenes Abgasleitungsteilstück angeflanscht ist. Von der Ausströmkammer 28 geht ein an der abgasaustrittsseitigen Stirnwand 23 angeschlossener Rohrstutzen 30 ab, an dem ein zum Hauptschalldämpfer 2 hinführendes Abgasleitungsteilstück 1/1 angeflanscht ist. Der bzw. die Katalysator(en) 15 bzw. 15 und 16 sind im Innenraum des Vorschalldämpfers 14 durch die gasdichte Zwischenwand 26 und - soweit notwendig (wie dargestellt) - durch eine weitere, nicht gasdichte, z. B. perforierte Haltewand 31 lagestabil gehaltert. Alternativ zu ihrer aus Fig. 21 ersichtlichen Anordnung achsparallel zur Vorschalldämpfer-Längsachse können der bzw. die Katalysator(en) 15 bzw. 15 und 16 aber auch z. B. wie aus Fig. 23 ersichtlich mit ihren Längsachsen unter einem spitzen Winkel zur Vorschalldämpfer-Längsachse liegend in den Vorschalldämpfer 14 eingebaut sein.

Nachfolgend ist auf weitere Details von Ausführungsbeispielen des Hauptschalldämpfers 2 näher eingegangen.

In den dargestellten Beispielen sind die beiden Stirnwände 3, 4 weitestgehend eben und parallel zueinander angeordnet. Die Umfangsaußenwand 5 ist zylindrisch. Es liegt somit ein etwa tonnenförmiger Hauptschalldämpfer 2 vor, in dessen Innenraum die gasdichte Zwischenwand 6 und die gegebenenfalls des weiteren vorgesehene Haltewand 24 parallel zu den Stirnwänden 3, 4 angeordnet und an der Innenseite der Umfangsaußenwand 5 befestigt, z. B. angeschweißt sind. Die einzelnen, von den Wänden 6, 24 gehaltenen Abgasnachbehandlungsmodule 9 sind achsparallel zueinander und zur Längsachse des Hauptschalldämpfers 2 angeordnet und kommunizieren mit ihrer Eintrittsöffnung mit der Einströmkammer 7 und mit ihrer Austrittsöffnung mit der Ausströmkammer 8.

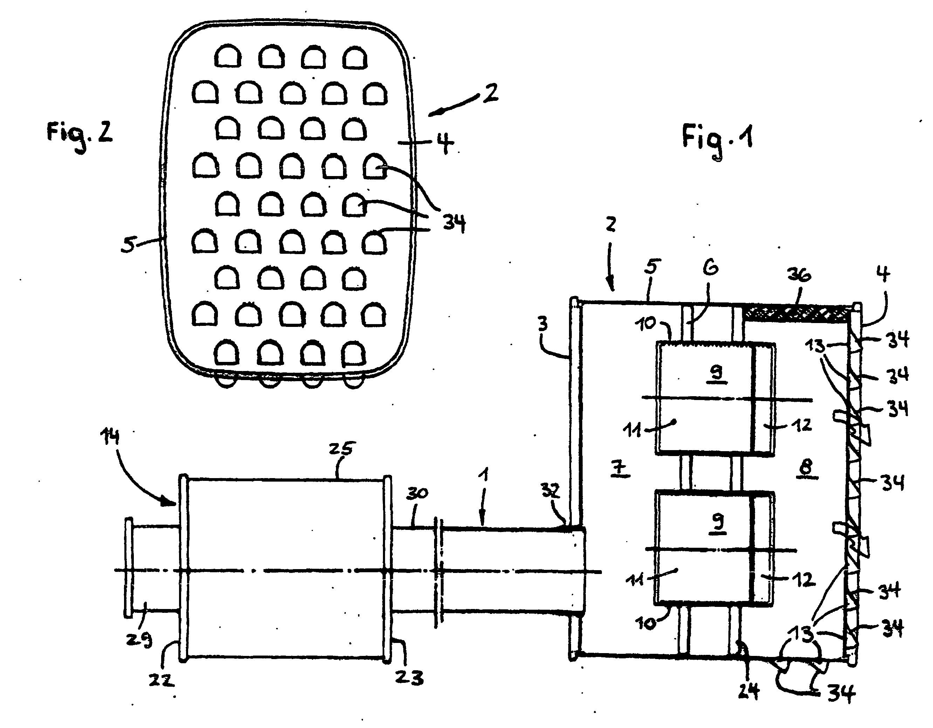

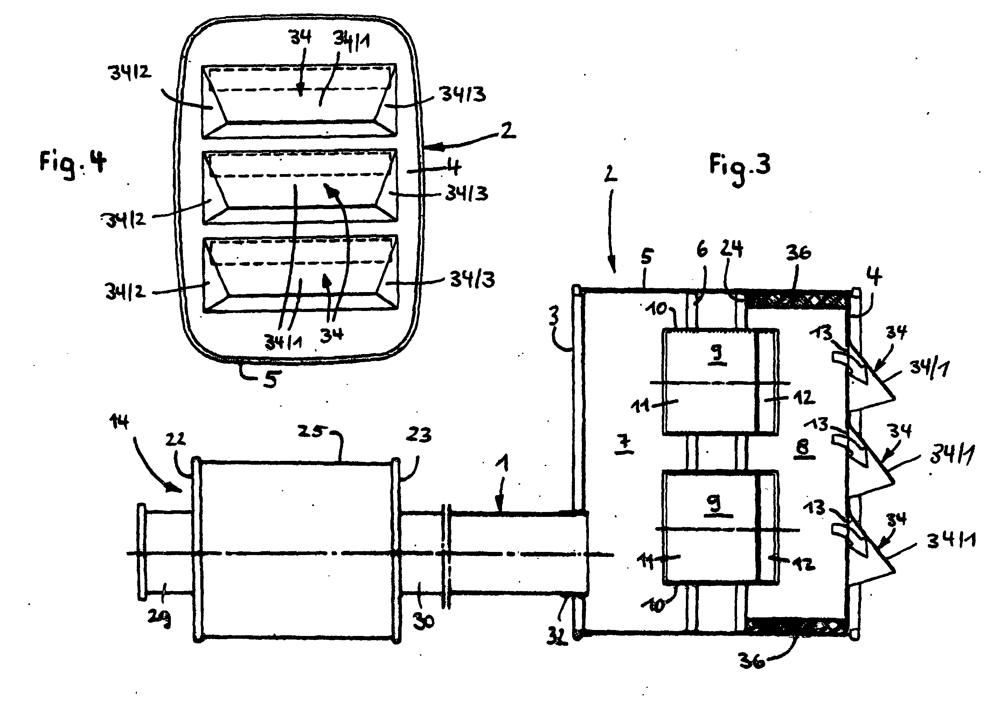

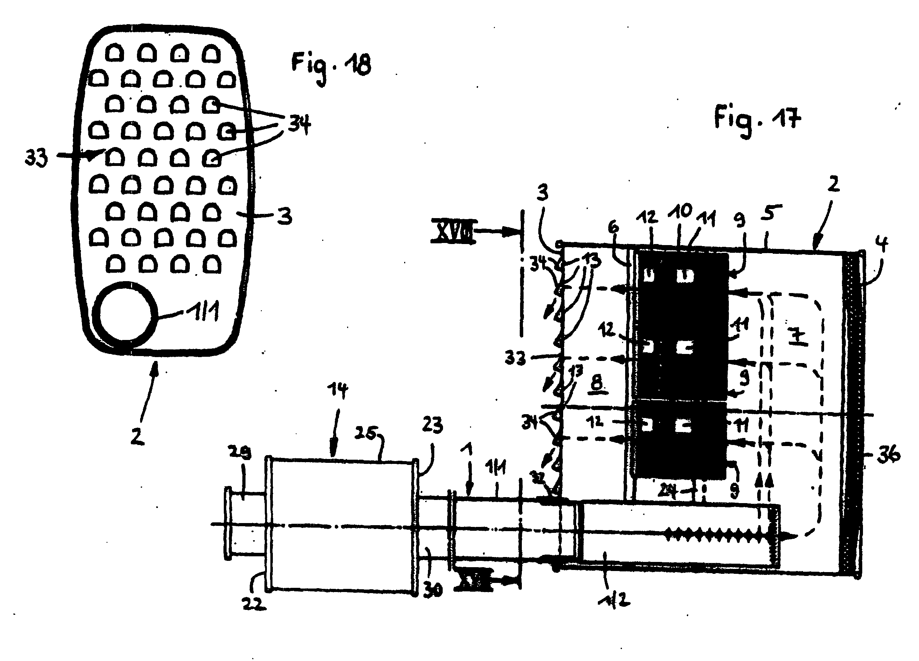

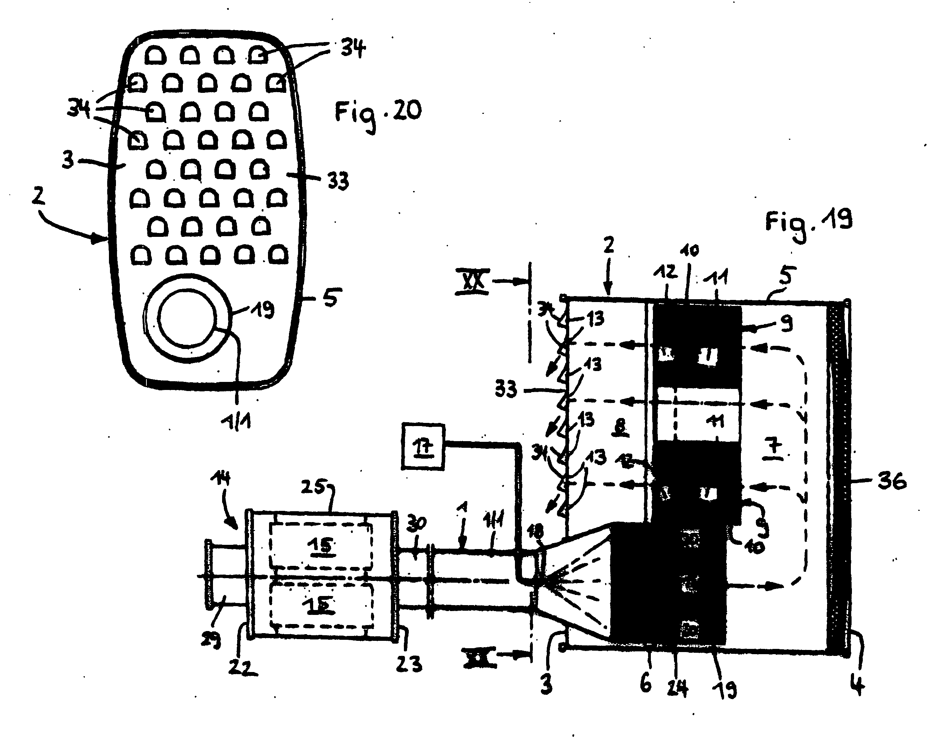

In die Einströmkammer 7 des Hauptschalldämpfers 2 mündet in den Fällen der Beispiele gemäß Fig. 1-2, 3-4, 5-6, 7-8, 9-10, 11-12, 13-14, 15-16 die Abgasleitung 1 mit einem Teilstück 1/1 ein, das an einem in der Stirnwand 3 gegebenen Rohrstutzen 32 angeschlossen ist. Im Fall des Beispiels gemäß Fig. 17-18 setzt sich die Abgasleitung 1 intern des Hauptschalldämpfers 2 mit einem Teilstück 1/2 fort, das dort die Ausströmkammer 8, die Zwischenwand 6 und die Tragwand 24 durchdringt und hinter der Tragwand 24 in die Einströmkammer 7 ausmündet. Im Fall des Beispiels gemäß Fig. 19-20 ist der zusammen mit dem Verdampfer 20 im Gehäuse 19 aufgenommene Hydrolysekatalysator 16 am Ende der Abgasleitung 1 bzw. deren Teilstück 1/1 in den Innenraum des Hauptschalldämpfers 2 hineinragend angeordnet. Dabei durchdringt das Gehäuse 19 die Ausströmkammer 8, die Zwischenwand 6 und die Tragwand 24 und seine hinter der Tragwand 24 liegende Austrittsöffnung kommuniziert mit der Einströmkammer 7.

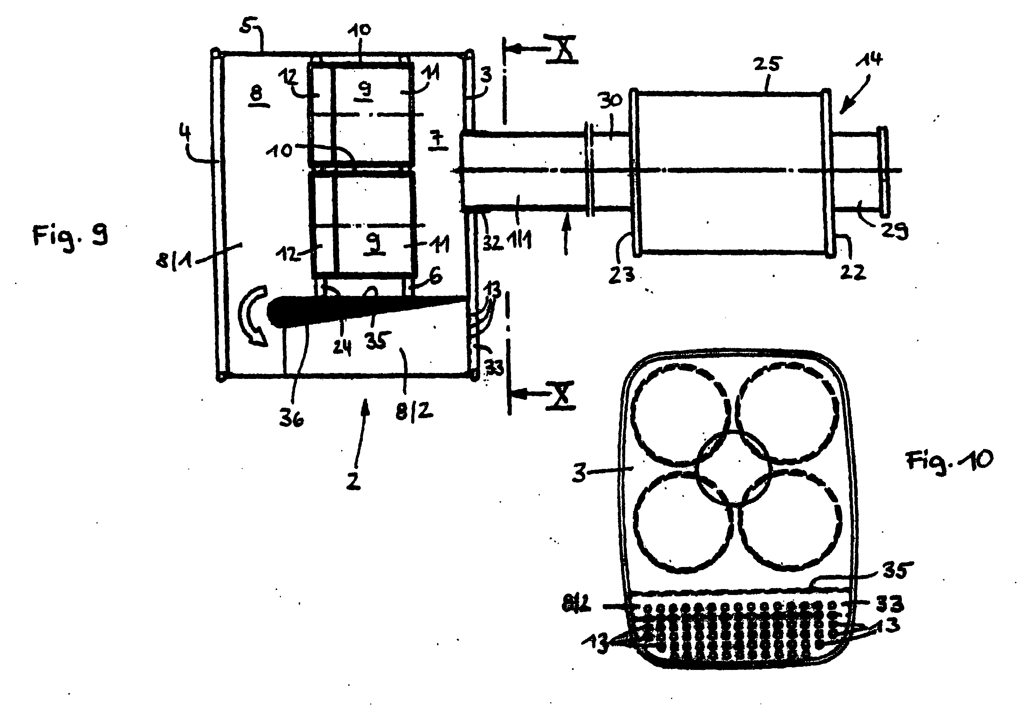

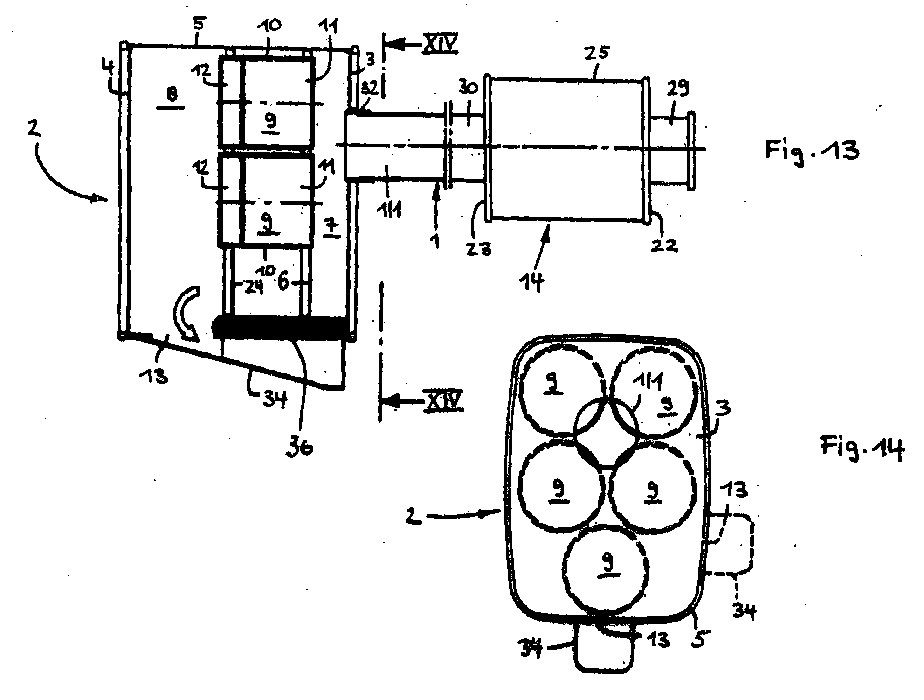

In den Beispielen gemäß Fig. 1-2, 3-4, 5-6, 7-8 sind entweder zwei oder vier, in den Beispielen gemäß Fig. 9-10, 11-12, 15-16, 17-18, 19-20 sind vier, im Fall des Beispiels gemäß Fig. 13-14 sind fünf Abgasnachbehandlungsmodule 9 in den Hauptschalldämpfer 2 eingebaut.

Unabhängig von seiner sonstigen Ausgestaltung kennzeichnet sich der Hauptschalldämpfer 2 erfindungsgemäß dadurch, dass er entweder an seiner abgasaustrittsseitigen Stirnwand 4 - siehe Fig. 1-2, 3-4, 5-6, 7-8 - und/oder dem abgasaustrittsseitigen Endbereich seiner Umfangsaußenwand 5 - siehe Fig. 1-2, 13-14, 15-16 - oder einem für Abgasauslass vorgesehenen Bereich 33 seiner abgaseintrittsseitigen Stirnwand 2 - siehe Fig. 9-10, 11-12, 17-18, 19-20 - eine oder mehrere für einen direkten, endrohrlosen Auslass des gereinigten Abgases in die Atmosphäre entsprechend gestaltete Auslassöffnung(en) 13 aufweist.

Dabei kann jeder Auslassöffnung 13 oder einer Gruppe von Auslassöffnungen 13 ein Strömungsleitelement 34 zugeordnet sein, das dem aus der Ausströmkammer 8 in die Atmosphäre austretendem Abgas eine bestimmte Richtung oder Richtungsänderung, z. B. nach unten oder schräg nach hinten zur Fahrbahn hin aufprägt. Außerdem kann jedes Strömungsleitelement 34 auch im Hinblick darauf ausgebildet sein, dass dem durch- bzw. vorbeiströmenden Abgas eine definierte Druckentspannung aufprägbar ist. Letzteres kann durch speziell eingebaute oder vorgesehene Leitwände bzw. weitere Umlenkorgane realisiert sein.

Im Beispiel von Fig. 1-2 ist eine Vielzahl von Auslassöffnungen 13 in der abgasaustrittsseitigen Stirnwand 4 vorgesehen und jeder dieser Auslassöffnungen 13 eine nach Art einer Hutze ausgebildetes Strömungsleitelement 34 zugeordnet. In diesem Fall sind die Auslassöffnungen 13 und die zugeordneten Hutzen 34 einstückig mit der Stirnwand 4 des Hauptschalldämpfers 2 durch Ausstanzen und Ausprägen hergestellt.

Im Beispiel von Fig. 3-4 sind drei Auslassöffnungen 13 in der abgasaustrittsseitigen Stirnwand 4 des Hauptschalldämpfers 2 vorgesehen, von denen jede durch ein nach Art einer Hutze gestaltetes Strömungsleitelement 34 überdeckt ist, wobei die jeweilige Hutze eine schräg nach hinten unten gerichtete Abgasleitwand 34/1 aufweist, die in seitliche Begrenzungswände 34/2, 34/3 übergeht und somit eine Art Diffusor bildet.

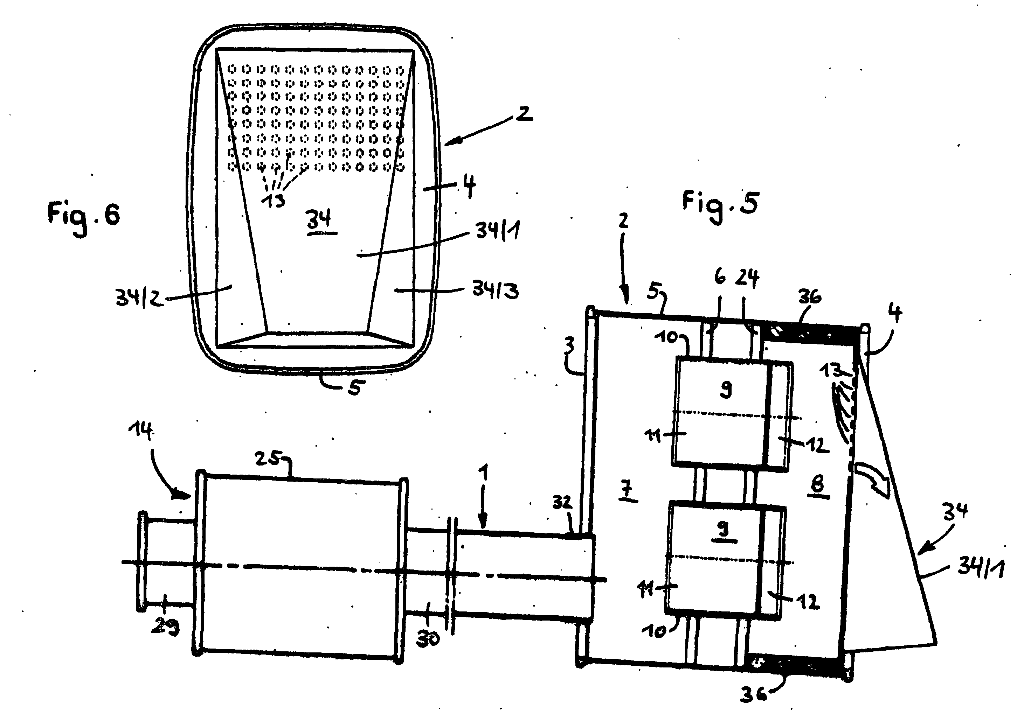

Im Beispiel gemäß Fig. 5-6 ist eine Vielzahl von Auslassöffnungen 13 in der oberen Hälfte der abgasaustrittsseitigen Stirnwand 4 des Hauptschalldämpfers 2 vorgesehen. Diese Auslassöffnungen 13 sind von einem außen auf die Stirnwand 4 aufgesetzten, nach Art einer Hutze gestalteten Strömungsleitelement 34 überdeckt. Diese Hutze weist eine schräg nach hinten unten weit heruntergezogene Abgasleitwand 34/1 auf, die in seitliche Begrenzungswände 34/2, 34/3 übergeht. Strömungsmäßig bildet diese Hutze einen sich keglig erweiternden Diffusor.

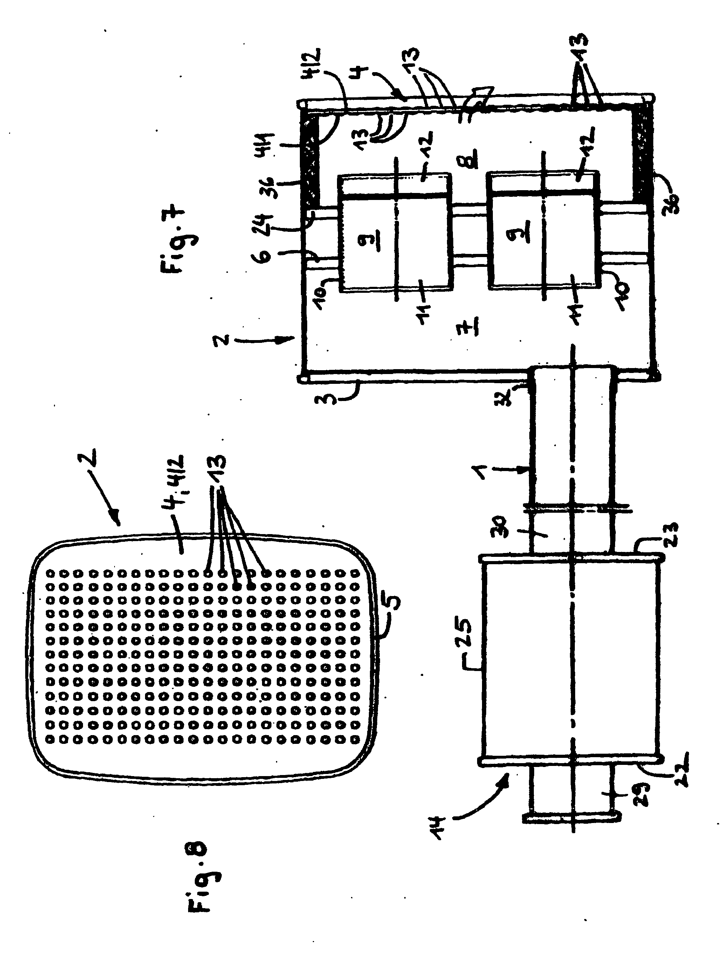

Im Beispiel gemäß Fig. 7-8 besteht die abgasaustrittsseitige Stirnwand 4 des Hauptschalldämpfers 2 aus mindestens zwei um ein gewisses Maß parallel voneinander beabstandeten Teilwänden 4/1, 4/2, wobei der größte Teil jeder derselben mit die Auslassöffnungen 13 bildenden Löchern perforiert ist. Dabei sind die Auslassöffnungen 13 in der äußeren Teilwand 4/2 so angeordnet, dass sie nicht zu jenen in der inneren Teilwand 4/1 angeordneten Auslassöffnungen 13 fluchten. Vielmehr sind die Auslassöffnungen 13 der inneren Teilwand 4/1 in ihrer axialen Projektion außen durch einen nicht perforierten Wandbereich der äußeren Teilwand 4/2, der neben bzw. zwischen benachbarten Auslassöffnungen 13 gegeben ist, abgedeckt. Das aus der Ausströmkammer 8 austretende Abgas gelangt nach Durchströmung der Auslassöffnungen 13 der inneren Teilwand 4/1 in den Zwischenraum zwischen beiden Teilwänden 4/1, 4/2 und tritt von dort über die Auslassöffnungen 13 in der äußeren Teilwand 4/2 in die Atmosphäre aus. Es wäre denkbar, dieser Stirnwand 4/1, 4/2 ein Strömungsleitelement 34 in Form einer Hutze zuzuordnen, die wie jene gemäß Fig. 5-6 ausgebildet sein könnte.

In den Beispielen von Fig. 9-10 und 11-12 ist jener untere Bereich 33 der abgaseintrittsseitigen Stirnwand 3, der eine untere Teilkammer 8/1 der Ausströmkammer 8 abdeckt, durch eine Vielzahl von die Auslassöffnungen 13 bildenden Löchern perforiert. Intern des Hauptschalldämpfers 2 gelangt das gereinigte Abgas in einen Teilraum 8/1 der Ausströmkammer 8 und von dort über den unteren Teilraum 812, der einen diffusorähnlichen Querschnitt aufweist und durch eine oder mehrere Längszwischenwände 35 zur Einströmkammer 7 hin abgeschottet ist, zur abgaseintrittsseitigen Stirnwand 3 und tritt dort im Bereich 33 über die Auslassöffnungen 13 in die Atmosphäre aus. Es wäre denkbar, diesen mit Auslassöffnungen 13 perforierten Bereich 33 der Stirnwand 3 mit einem nach Art einer Hutze ausgebildeten Strömungsleitelement 34 zu überdecken, um dem austretenden Abgas eine Richtungskomponente nach unten bzw. schräg nach hinten unten aufzuprägen.

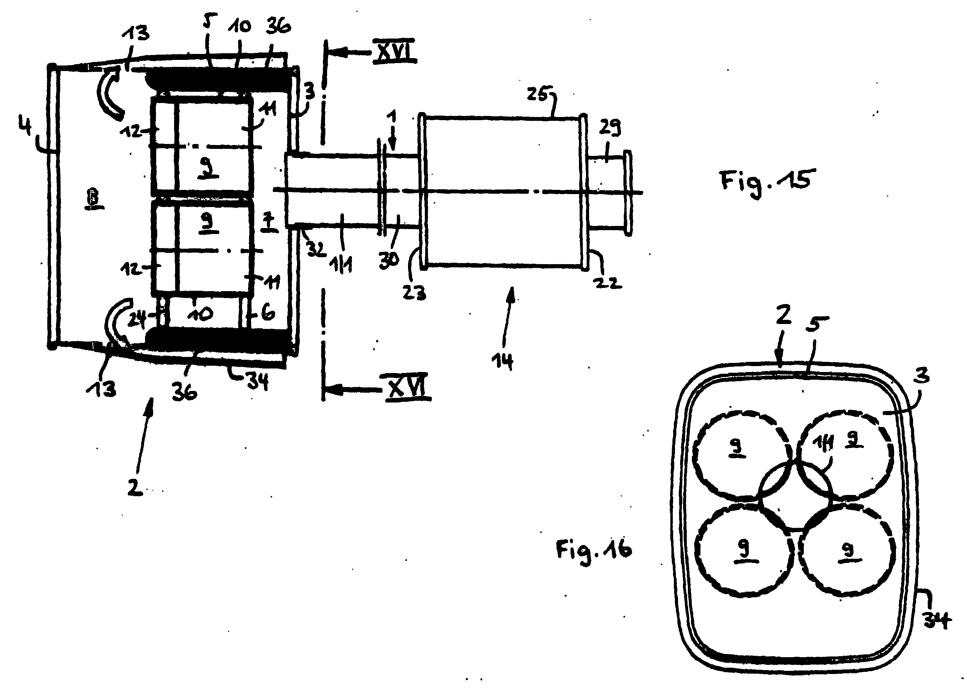

Im Beispiel von Fig. 13-14 ist im Bereich der Ausströmkammer 8 in der Außenumfangswand 5 eine Auslassöffnung 13 vorgesehen, der ein nach Art einer Hutze ausgebildetes und sich diffusorartig erweiterndes Strömungsleitelement 34 zugeordnet ist. Dieses erstreckt sich von der Stirnwand 4 in Richtung Stirnwand 3 ganz oder teilweise bis zu dieser hin. Anstelle nur einer Auslassöffnung 13 im unteren Bereich des Hauptschalldämpfers 2 könnten auch noch wenigstens eine weitere seitliche Auslassöffnung 13 in der Umfangsaußenwand 5 vorgesehen sein, der ebenfalls ein entsprechendes Strömungsleitelement 34 - wie dargestellt - zugeordnet wäre. Dieser Fall ist gestrichelt in Fig. 14 andeutet.

Im Beispiel gemäß Fig. 15-16 sind im Bereich der Ausströmkammer 8 in der Umfangsaußenwand 5 mehrere Auslassöffnungen 13 vorgesehen. Das durch diese austretende Abgas wird in einem trichterrohrartigen Strömungsleitelement 34, das zwischen den beiden Stirnwänden 3,4 die gesamte Umfangsaußenwand 5 sich diffusorartig erweiternd umgibt, kanalisiert in die Atmosphäre ausgelassen.

In den Beispielen gemäß Fig. 17-18 und 19-20 ist ein Großteil der abgaseintrittsseitigen Stirnwand 3 des Hauptschalldämpfers 2, die in diesen Fällen die Ausströmkammer 8 stimseitig begrenzt, mit einer Vielzahl von Auslassöffnungen 13 ausgestattet, von denen jeder ein durch eine Hutze gebildetes Strömungsleitelement 34 zugeordnet ist. Auch in diesen Fällen sind die Auslassöffnungen 13 und die Hutzen 34 einstückig mit der Stirnwand 3 durch Ausstanzen und Ausprägen ausgebildet.

Hinsichtlich der Schalldämpfungsmaßnahmen ist folgendes zu erwähnen. Der Hauptschalldämpfer 2 ist innenseitig zumindest im Bereich seiner Ausströmkammer 8, 8/1, 8/2 zumindest partiell mit schallabsorbierendem Material ausgekleidet. Ebenso ist der Vorschalldämpfer 14 innenseitig zumindest im Bereich seiner Ausströmkammer 28 zumindest partiell mit schallabsorbierendem Material ausgekleidet. Solche Zonen mit schallabsorbierendem Material sind in der Zeichnung mit 36 bezeichnet.

Generell sind das im Hauptschalldämpfer 2 gegebene Teilschalldämpfungsvolumen in Verbindung mit den dortigen Schalldämpfungsmitteln 36 und das im Vorschalldämpfer 14 gegebene Teilschalldämpfungsvolumen in Verbindung mit den dortigen Schalldämpfungsmitteln 36 so ausgelegt, dass sie aufaddiert einen Gesamtschalldämpfungseffekt ergeben, mit dem die gesetzlich vorgeschriebenen Schallemissionsgrenzwerte erreicht bzw. unterschritten werden.

## Patentansprüche

1. Abgasstrang einer Brennkraftmaschine, insbesondere Dieselmotor eines Nutzfahrzeuges wie Lastkraftwagen oder Omnibus, mit integrierten Abgasnachbehandlungs- und Schalldämpfungsvorrichtungen, **gekennzeichnet durch** folgende Merkmale:
- einen Hauptschalldämpfer (2), der außen **durch** eine vordere Stirnwand (3), eine hintere Stirnwand (4) und eine Umfangsaußenwand (5) begrenzt sowie innen **durch** eine Wand (6) in eine Einströmkammer (7) und eine Ausströmkammer (8) unterteilt ist und in den mehrere parallel durchströmbare, einerseits mit der Einströmkammer (7), andererseits mit der Ausströmkammer (8) kommunizierende Abgasnachbehandlungsmodule (9) eingebaut sind, die innerhalb ihrer Gehäuse (10) jeweils einen SCR-Katalysator (11), gegebenenfalls auch einen nachfolgenden Ammoniaksperrkatalysator (12) aufweisen,
- der Hauptschalldämpfer (2) ist endrohrlos ausgebildet und weist an seiner abgasaustrittsseitigen Stirnwand (4) und/oder dem abgasaustrittsseitigen Endbereich seiner Umfangsaußenwand (5) oder einem für Abgasauslass vorgesehenen Bereich (33) seiner abgaseintrittsseitigen Stirnwand (3) eine oder mehrere für einen direkten, endrohrlosen Auslass des gereinigten Abgases aus der Ausströmkammer (8) in die Atmosphäre entsprechend gestaltete Auslassöffnung(en) (13) auf,
- der Hauptschalldämpfer (2) ist auf ein Teilschalldämpfungsvolumen ausgelegt und das im Hauptschalldämpfer (2) fehlende Schalldämpfungsvolumen ist in einem Vorschalldämpfer (14) realisiert, der beabstandet zum Hauptschalldämpfer (2) möglichst motornah in die Abgasleitung (1) eingebaut ist,
- in den Vorschalldämpfer (14) ist wenigstens ein den NO₂-Anteil des Stickoxids im Abgas signifikant erhöhender Oxidationskatalysator (15) eingebaut,
- einen Hydrolysekatalysator (16), der entweder
a) in den Vorschalldämpfer (14), dort parallel zu dem/den Oxidationskatalysator(en) (15), oder
b) in einen zwischen Vor- und Hauptschalldämpfer (14, 2) gegebenen Abschnitt (1/1) der Abgasleitung (1), oder
c) in den Hauptschalldämpfer (2), dort strömungsmäßig in die Einströmkammer (7) ausmündend,
eingebaut ist, wobei in das Abgas kurz vor dem Hydrolysekatalysator (16) ein von einer Dosiereinrichtung (17) bereitgestelltes Reduktionsmittel, wie Harnstoffpartikel oder eine Harnstoff-Wasser-Lösung, eindüsbar ist.

2. Abgasstrang nach Anspruch 1, **dadurch gekennzeichnet, dass** am Hauptschalldämpfer (2) jeder Auslassöffnung (13) oder einer Gruppe von Auslassöffnungen (13) ein dem aus der Ausströmkammer (8) austretenden Abgas eine bestimmte Richtung oder Richtungsänderung aufprägendes Strömungsleitelement (34) zugeordnet ist.

3. Abgasstrang nach Anspruch 2, **dadurch gekennzeichnet, dass** am Hauptschalldämpfer (2) jedes Strömungsleitelement (34) auch im Hinblick darauf, dass dem durch- bzw. vorbeiströmenden Abgas eine definierte Druckentspannung aufprägbar ist, ausgebildet ist.

4. Abgasstrang nach einem der Ansprüche 1 bis 3, **dadurch gekennzeichnet, dass** der bzw. jeder der in den Innenraum des Hauptschalldämpfers (2) eingebaute(n) Abgasnachbehandlungsmodul(e) (9) achsparallel zur Längsmittelachse des Hauptschalldämpfers (2) verlaufend mit seinem Gehäuse (10) gasdicht an einer die Einströmkammer (7) zur Ausströmkammer (8) hin abschottenden Zwischenwand (6) und gegebenenfalls einer hierzu parallelen, nicht gasdichten Haltewand (24) befestigt ist und somit zwischen dem Eintrittsbereich und Austrittsbereich jedes Abgasnachbehandlungsmoduls (9) und der diesem jeweils benachbarten Stirnwand (3, 4) des Hauptschalldämpfers (2) ein größerer Abstand verbleibt.

5. Abgasstrang nach einem der Ansprüche 1 bis 3, **dadurch gekennzeichnet, dass** am Hauptschalldämpfer (2) jeder Auslassöffnung (13) ein nach Art einer Hutze ausgebildetes Strömungsleitelement (34) zugeordnet ist.

6. Abgasstrang nach Anspruch 5, **dadurch gekennzeichnet, dass** die Hutze(n) (34) einzeln hergestellt und dann außen an der die Auslassöffnungen (13) aufweisenden Stimwand (36, 4) des Hauptschalldämpfers (2) befestigt ist bzw. sind.

7. Abgasstrang nach einem der Ansprüche 5 und 6, **dadurch gekennzeichnet, dass** eine Hutze (34) durch ein Rohrbogensegment gebildet ist, dessen Umlenkwinkel - je nach dem Grad der gewünschten Abgasumlenkung nach unten - zwischen ca. 30° und 90° beträgt.

8. Abgasstrang nach Anspruch 7, **dadurch gekennzeichnet, dass** in eine Hutze (34) wenigstens eine Leitwand eingebaut ist, die sich vorzugsweise parallel zur Umleitlinie erstreckt.

9. Abgasstrang nach einem der Ansprüche 5 und 6, **dadurch gekennzeichnet, dass** die Hutze (34) eine schräg nach hinten unten gerichtete Abgasleitwand (34/1) aufweist, die in seitliche Begrenzungswände (34/2, 34/3) übergeht.

10. Abgasstrang nach Anspruch 5, **dadurch gekennzeichnet, dass** die Auslasskanäle (13) und die zugeordneten Hutzen (34) einstückig mit der betreffenden Stirnwand (3 bzw.4) des Hauptschalldämpfers (2) durch Ausstanzen und Ausprägen hergestellt sind.

11. Abgasstrang nach einem der Ansprüche 1 bis 3, **dadurch gekennzeichnet, dass** eine größere Anzahl von Auslassöffnungen (13) nur in einem bestimmten Bereich (33) einer Stirnwand (3 bzw. 4) des Hauptschalldämpfers (2), z. B. nur in deren oberer oder nur deren unterer Hälfte angeordnet ist, und dass diesen Auslassöffnungen (13) ein gemeinsames, nach Art einer Hutze ausgebildetes Strömungsleitelement (34) zugeordnet ist.

12. Abgasstrang nach einem der vorhergehenden Ansprüche, **dadurch gekennzeichnet, dass** die bzw. jede Hutze (34) am Hauptschalldämpfer (2) einen sich in Ausströmrichtung trichterartig erweiternden Diffusor bildet.

13. Abgasstrang nach Anspruch 6, **dadurch gekennzeichnet, dass** dann, wenn die Auslassöffnung(en) (13) in der Umfangsaußenwand (5) des Hauptschalldämpfers (2) gegeben ist bzw. sind, dieser bzw. diesen Auslassöffnung(en) (13) ein bzw. je ein oder ein gemeinsames nach Art einer Hutze gestaltetes Strömungsleitelement (34) zugeordnet ist, das sich von der einen Stirnwand (3 bzw. 4) zur bzw. in Richtung der anderen Stirnwand (4 bzw. 3) hin erstreckt und entweder Teilbereiche der Umfangsaußenwand (5) oder die gesamte Umfangsaußenwand (5) des Hauptschalldämpfers (2) überdeckt.

14. Abgasstrang nach Anspruch 4, **dadurch gekennzeichnet, dass** die Ausströmkammer (8) in dem Fall, wenn die Auslassöffnung(en) (13) in einem Teilbereich (33) der abgaseintrittsseitigen Stirnwand (3) des Hauptschalldämpfers (2) gegeben sind, durch eine oder mehrere Längszwischenwände zur Einströmkammer (35) hin abgeschottet ist und mit der solchermaßen begrenzten betreffenden Teilkammer (8/2) zu der/den Auslassöffnung(en) (13) in der Stirnwand (3) hinreicht.

15. Abgasstrang nach Anspruch 1, **dadurch gekennzeichnet, dass** in den Vorschalldämpfer (14) achsparallel zu dessen Längsachse und zueinander ein oder mehrere Oxidationskatalysator(en) (15) und gegebenenfalls ein Hydrolysekatalysator (16) eingebaut sind, derart, dass zwischen deren Gehäuse (19, 21) und der ein- bzw. austrittsseitig benachbarten Stirnwand (3, 4) des Vorschalldämpfers (14) ein bestimmter Abstand gegeben ist.

16. Abgasstrang nach Anspruch 1, **dadurch gekennzeichnet, dass** in den Vorschalldämpfer (14) ein oder mehrere Oxidationskatalysator(en) (15), gegebenenfalls auch ein Hydrokatalysator (15) achsparallel zueinander und mit ihren Längsachsen unter einem spitzen Winkel zur Vorschalldämpfer-Längsachse liegend eingebaut sind.

17. Abgasstrang nach einem der Ansprüche 15 und 16, **dadurch gekennzeichnet, dass** der Vorschalldämpfer (14) außen durch eine vordere Stirnwand (22), eine hintere Stirnwand (23) und eine Umfangsaußenwand (25) begrenzt ist, und dass der Innenraum des Vorschalldämpfers (14) durch eine gasdichte Zwischenwand (26) in eine Einströmkammer (27) und eine Ausströmkammer (28) unterteilt ist, wobei in die Einströmkammer (27) ein an der Stirnwand (22) angeschlossener Rohrstutzen (29) ausmündet, an dem entweder eine Abgassammelleitung oder ein an letzterer angeschlossener Abgaskrümmer oder der Auslassstutzen einer Abgasturbine eines Abgasturboladeraggregates oder ein an letzterer angeschlossenes Abgasleitungsteilstück angeschlossen ist, und wobei der bzw. die Katalysatoren (15, 16) durch die Zwischenwand (26) und gegebenenfalls eine weitere, nicht gasdichte Haltewand (31) lagestabil im Vorschalldämpfer-Innenraum gehaltert sind, und wobei von der Ausströmkammer (28) ein an der Stirnwand (23) angeschlossener Rohrstutzen (30) abgeht, an dem ein zum Hauptschalldämpfer (2) hinführendes Abgasleitungsteilstück (1/1) angeordnet ist.

18. Abgasstrang nach einem der Ansprüche 1 und 17, **dadurch gekennzeichnet, dass** der Vorschalldämpfer (14) zumindest im Bereich seiner Ausströmkammer (28) mindestens partiell mit schallabsorbierendem Material (36) ausgekleidet ist.

19. Abgasstrang nach Anspruch 4, **dadurch gekennzeichnet, dass** der Hauptschalldämpfer (2) zumindest im Bereich der Ausströmkammer (8) partiell mit schallabsorbierenden Material (36) ausgekleidet ist.

20. Abgasstrang nach Anspruch 1, **dadurch gekennzeichnet, dass** die Schalldämpfungsmaßnahmen im endrohrlosen Hauptschalldämpfer (2) addiert zu den Schalldämpfungsmaßnahmen im Vorschalldämpfer (14) einen Gesamtschalldämpfungseffekt ergeben, der der Einhaltung gesetzlicher Schallemissionswerte gerecht wird.

## Claims

1. Exhaust-system branch of an internal combustion engine, particularly a diesel engine in a commercial vehicle, eg a truck or bus/coach, with integrated exhaust-gas-aftertreatment-system and sound-attenuation devices, **characterised by** the following features:
• a main silencer (2) whose exterior is limited by a front end wall (3), a rear end wall (4) and a circumferential wall (5) and whose interior is subdivided into an inlet chamber (7) and an outlet chamber (8) by a wall (6), and in which main silencer (2) several exhaust-gas-aftertreatment modules (9) are installed in parallel arrangement and communicate on the one hand with the inlet chamber (7) and on the other with the outlet chamber (8) and, within their housings (10), feature an SCR catalytic converter (11) and, if fitted, a downstream ammonia-blocking catalytic converter (12), exhaust gases being able to flow through said exhaust-gas-aftertreatment modules (9).
• the main silencer (2) is designed without end pipe and has one or several correspondingly designed outlet orifice(s) (13) provided for the direct end-pipe-less discharge of cleaned exhaust gas from the outlet chamber (8) into the atmosphere and arranged on its end wall (4) at the exhaust-gas outlet and/or in the end area of its circumferential outer wall (5), which end area is at the exhaust-gas outlet, or in an area (33) of its end wall (3), which area (33) is at the exhaust-gas inlet and is provided for the discharge of exhaust gases,
• the main silencer (2) is designed to provide a partial attenuation volume and the partial attenuation volume not supplied by the main silencer (2) is realised in a pre-silencer (14) installed in the exhaust pipe (1) at a distance relative to the main silencer (2) and as close to the engine as possible,
• at least one oxidising catalytic converter (15) significantly increasing the NO₂ content of the oxides of nitrogen in the exhaust gas is installed in the pre-silencer (14)
• a hydrolytic catalytic converter (16) is installed either
a) in the pre-silencer (14) where it is arranged parallel to the oxidising catalytic converter(s) (15) or
b) in a section (1/1) of the exhaust pipe (1), which section (1/1) is located between the pre-silencer and the main silencer (14, 2) or
c) in the main silencer (2), where the flow of exhaust gases enters the inlet chamber (7),
whereby a reducing agent, eg urea particulates or a urea-water solution, is supplied by a metering device (17) and can be sprayed into the exhaust gas immediately upstream of the hydrolytic catalytic converter (16).

2. Exhaust-system branch according to Claim 1, **characterised in that** on the main silencer (2) a flow guide element (34) imparting a certain direction or change of direction to the exhaust gas flowing out of the outlet chamber (8) is allocated to each outlet orifice (13) or to a group of outlet orifices (13).

3. Exhaust-system branch according to Claim 2, **characterised in that** each flow guide element (34) on the main silencer (2) is designed so that a defined pressure relaxation can be imparted to the exhaust gases flowing through or past it.

4. Exhaust-system branch according one of the Claims 1 to 3, **characterised in that** the or each of the exhaust-gas aftertreatment module(s) (9) installed in the interior of the main silencer (2) is (are), with its (their) housing(s) (10), arranged parallel to the longitudinal axis of the main silencer (2), is, in a gas-tight manner, attached to an intermediate wall (6) sealing the inlet chamber (7) off from the outlet chamber (8) and, if fitted, to a non-gas-tight holding wall (24) which is parallel to said intermediate wall (6) so that a fairly large distance remains between the inlet and the outlet areas of each exhaust-gas aftertreatment module (9) and the end wall (3, 4) of the main silencer (2), which end wall (3, 4) is adjacent to the respective exhaust-gas aftertreatment module (9).

5. Exhaust-system branch according to the Claims 1 to 3, **characterised in that** on the main silencer (2) a flow guide element (34) designed as a scoop is allocated to each outlet orifice (13).

6. Exhaust-system branch according to Claim 5, **characterised in that** scoop(s) (34) are manufactured singly and attached to the outside of the end wall (36, 4) of the main silencer (2), said end wall (36, 4) being provided with the outlet orifices (13).

7. Exhaust-system branch according to the Claims 5 and 6, **characterised in that** one scoop (34) consists of a pipe elbow segment whose deflection angle - depending on the degree of the required downward deflection of the exhaust gas - is between approximately 30° and 90° degrees.

8. Exhaust-system branch according to Claim 7, **characterised in that** at least one guide wall is installed in a scoop (34) and preferably extends parallel to the deflection line.

9. Exhaust-system branch according to the Claims 5 and 6, **characterised in that** the scoop (34) is provided with an exhaust-gas guide wall (34/1) which points towards the rear at an oblique downward angle and blends into the lateral limiting walls (34/2, 34/3).

10. Exhaust-system branch according to Claim 5, **characterised in that** the outlet orifices (13), the associated scoops (34) and the respective end wall (3 and 4) of the main silencer (2) are manufactured as one piece in a punching and pressing process.

11. Exhaust-system branch according to one of the Claims 1 to 3, **characterised in that** a larger number of outlet orifices (13) is arranged only in a certain area (33) of an end wall (3 and 4) of the main silencer (2), eg only in the upper or only in the lower half of said end wall, and that a common flow guide element (34) designed as a scoop is allocated to these outlet orifices (13).

12. Exhaust-system branch according to one of the foregoing Claims, **characterised in that** the/each scoop (34) on the main silencer (2) forms a diffuser with a funnel-type expansion in the direction of the outlet.

13. Exhaust-system branch according to Claim 6, **characterised in that** if the outlet orifice(s) (13) is/are provided in the circumferential outer wall (5) of the main silencer (2) a flow guide element (34) designed as a scoop is allocated to said outlet orifice(s) (13) or to each of said outlet orifice(s) (13) or a common flow guide element (34) designed as a scoop is allocated to said outlet orifice(s) (13), extends from the one end wall (3 or 4) to or in the direction of the other end wall (4 or 3) and overlaps either partial areas of the circumferential outer wall (5) or the entire circumferential outer wall (5) of the main silencer (2).

14. Exhaust-system branch according to Claim 4, **characterised in that** if the outlet orifices (13) are provided in a partial area (33) of the end wall (3) of the main silencer (2), which end wall (3) is at the exhaust-gas inlet, the outlet chamber (8) is sealed off from the inlet chamber (35) by means of one or several longitudinal intermediate walls and, with the partial chamber (8/2) thus limited, extends to the outlet orifice(s) (13) in the end wall (3).

15. Exhaust-system branch according to Claim 1, **characterised in that** in the pre-silencer (14) one or several oxidising catalytic converter(s) (15) are installed parallel to the longitudinal axis of said pre-silencer (14) and, if necessary, a hydrolytic catalytic converter (16) is installed in such a way that a certain distance is provided between their housings (19, 21) and the end wall (3, 4) of the pre-silencer (14), which end wall (3, 4) is adjacent to inlet and outlet ends.

16. Exhaust-system branch according to Claim 1, **characterised in that** in the pre-silencer (14) one or several oxidising catalytic converter(s) (15) and, if necessary, a hydrolytic catalytic converter (15) are installed in horizontal position and parallel to one another, their longitudinal axes forming an acute angle with the longitudinal axis of the pre-silencer.

17. Exhaust-system branch according to one of the Claims 15 and 16, **characterised in that** the outside of the pre-silencer (14) is limited by a front end wall (22), a rear end wall (23) and a circumferential wall (25) and that the interior of the pre-silencer (14) is divided into an inlet chamber (27) and an outlet chamber (28) by a gas-tight intermediate wall (26), whereby a pipe neck (29) is connected to the end wall (22) and opens into the inlet chamber (27), to which pipe neck (29) is connected either an exhaust-gas header pipe or an exhaust manifold connected to said header pipe or an outlet neck of an exhaust-gas turbine of a turbocharger or an exhaust-gas pipe section connected to said exhaust-gas turbine and whereby the catalytic converter(s) (15, 16) are supported in a stable position in the pre-silencer interior by means of the intermediate wall (26) and, if fitted, by another, non-gas-tight supporting wall (31), and whereby a pipe neck (30) connected to the end wall (23) leads away from the outlet chamber (28), said pipe neck (30) being provided with an exhaust-gas pipe section (1/1) which extends towards the main silencer (2).

18. Exhaust-system branch according to one of the Claims 1 and 17, **characterised in that** the pre-silencer (14) is at least partially clad with sound-absorbing material (36) at least in the area of its outlet chamber (28).

19. Exhaust-system branch according to Claim 4, **characterised in that** the main silencer (2) is partially clad with sound-absorbing material (36) at least in the area of the outlet chamber (8).

20. Exhaust-system branch according to Claim 1, **characterised in that** the sound attenuation measures in the end-pipe-less main silencer (2) and the sound attenuation measures in the pre-silencer (14) add up to an overall sound attenuation effect which complies with the statutory sound emission values.

## Revendications

1. Ligne d'échappement d'un moteur à combustion, en particulier d'un moteur diesel d'un véhicule industriel tel qu'un camion ou un autobus/autocar, avec dispositifs de traitement postérieur des gaz d'échappement et de réduction des émissions sonores, **caractérisée par** les données suivantes :
- un silencieux principal (1) délimité à l'extérieur par une paroi frontale avant (3), une paroi frontale arrière (4) et une paroi circonférentielle extérieure (5) et divisé à l'intérieur par une paroi (6) en une chambre d'admission (7) et une chambre d'échappement (8) et dans lequel sont montés plusieurs modules de traitement postérieur des gaz d'échappement (9) pouvant être traversés parallèlement et communiquant d'une part avec la chambre d'admission (7) et d'autre part avec la chambre d'échappement (8) sont montés et ces modules (9) présentent à l'intérieur de leur carter (10) pour chacun d'eux un catalyseur SCR (11) et, le cas échéant, également un catalyseur à rétention d'ammoniac (12),
- Le silencieux principal (2) ne possède pas de section terminale et présente sur sa paroi frontale (4) côté échappement des gaz d'échappement et/ou sur la partie terminale côté échappement des gaz d'échappement de sa paroi circonférentielle extérieure (5) ou sur la zone prévue pour l'échappement des gaz d'échappement de sa paroi frontale (3) côté admission des gaz d'échappement une ou plusieurs ouverture(s) d'échappement (13) formée(s) en conséquence pour une évacuation directe sans section terminale des gaz d'échappement filtrés hors de la chambre d'échappement (8) dans l'atmosphère,
- Le silencieux principal (2) est dimensionné sur un volume partiel de réduction des nuisances sonores et le volume de réduction des nuisances sonores manquant dans le silencieux principal (2) est réalisé dans le silencieux en amont (14), lequel est intégré le plus près possible du moteur dans la conduite d'échappement (1) à une certaine distance du silencieux principal (1),
- Dans le silencieux en amont (14) est intégré au minimum un catalyseur à oxydation (15) augmentant significativement la part des NO₂ d'oxyde d'azote dans les gaz d'échappement,
- Un catalyseur à hydrolyse (16), qui est monté soit
a) dans le silencieux en amont (14), à cet emplacement parallèlement au(x) catalyseur(s) à oxydation, soit
b) dans une section (1/1) donnée de la conduite d'échappement entre le silencieux en amont (14) et le silencieux principal (2), soit
c) dans le silencieux principal (2), débouchant par écoulement dans la chambre d'admission (7),
auquel cas un moyen de réduction tel que des particules d'urée ou une solution d'eau/urée mis à la disposition par un dispositif de dosage (17) puisse être injecté dans les gaz d'échappement juste en amont du catalyseur à hydrolyse (16).

2. Ligne d'échappement selon la revendication 1, **caractérisée par le fait qu'**à chaque ouverture d'échappement (13) ou à un groupe d'ouvertures d'échappement (13) sur le silencieux principal (2) est attribué un élément de guidage de flux (34) imposant aux gaz d'échappement sortant de la chambre d'échappement (8) une certaine direction ou une modification de la direction.

3. Ligne d'échappement selon la revendication 2, **caractérisée par le fait que** chaque élément de guidage de flux (34) sur le silencieux principal (2) est constitué également selon **le fait qu'**une décompression définie peut être imposée aux gaz d'échappement traversant ou passant à côté.

4. Ligne d'échappement selon une des revendications 1 à 3, **caractérisée par le fait que** le ou chacun des modules de traitement postérieur des gaz d'échappement (9) monté(s) à l'intérieur du silencieux principal (2) est fixé de manière étanche aux gaz parallèlement à l'axe par rapport à l'axe médian longitudinal du silencieux principal (2) longeant son carter (10) sur une paroi intermédiaire (6) cloisonnant la chambre d'admission (7) de la chambre d'échappement (8) et, le cas échéant, sur une paroi de support (24) parallèle à celle-ci et non étanche, ce qui assure ainsi un espace plus important entre la zone d'admission et la zone d'échappement de chaque module de traitement postérieur des gaz d'échappement (9) et les différentes parois frontales (3, 4) voisines de ce module du silencieux principal (2).

5. Ligne d'échappement selon une des revendications 1 à 3, **caractérisée par le fait qu'**à chaque ouverture d'échappement (13) sur le silencieux principal est attribué un élément de guidage de flux (34) ayant la forme d'un auvent.

6. Ligne d'échappement selon la revendication 5, **caractérisée par le fait que** le(s) auvent(s) d'échappement (34) est/sont fabriqué(s) séparément et fixé(s) ensuite à l'extérieur à la paroi frontale (36, 4) du silencieux principal (2) présentant des ouvertures d'échappement ( 13).

7. Ligne d'échappement selon une des revendications 5 et 6, **caractérisée par le fait qu'**un auvent d'échappement est constitué d'un segment de coude tubulaire dont l'angle de déviation est compris entre env. 30° et 90° en fonction du degré de la déviation souhaitée des gaz d'échappement.

8. Ligne d'échappement selon la revendication 7, **caractérisée par** le fait, dans un auvent d'échappement, au minimum une paroi de guidage est montée et s'étend de préférence parallèlement à la ligne de déviation.

9. Ligne d'échappement selon les revendications 5 et 6, **caractérisée par le fait que** l'auvent d'échappement (34) présente une paroi de guidage des gaz d'échappement (34/1) dirigée obliquement vers l'arrière et vers le bas qui se dissocie en parois latérales de délimitation (34/2, 34/3).

10. Ligne d'échappement selon la revendication 5, **caractérisée par le fait que** les conduits d'échappement (13) et les auvents d'échappement correspondants (34) sont fabriqués d'une seule pièce avec la paroi frontale correspondante (3 ou 4) du silencieux principal (2) par matriçage et frappe.

11. Ligne d'échappement selon une des revendications 1 à 3, **caractérisée par le fait qu'**un plus grand nombre d'ouvertures d'échappement (13) est disposé uniquement dans une certaine zone (33) d'une paroi frontale (3 ou 4) du silencieux principal (2), par exemple uniquement sur la moitié inférieure ou supérieure de celle-ci, et qu'à ces ouvertures d'échappement est attribué un élément de guidage de flux (34) commun ayant la forme d'un auvent.

12. Ligne d'échappement selon une des revendications mentionnées précédemment, **caractérisée par** le fait le ou chaque auvent d'échappement (34) sur le silencieux principal (2) constitue un diffuseur s'étendant dans la direction de l'échappement tel un entonnoir.

13. Ligne d'échappement selon la revendication 6, **caractérisée par le fait qu'**ensuite lorsqu'il existe une/des ouverture(s) d'échappement (13) dans la paroi circonférentielle extérieure (5) du silencieux principal (2), un élément de guidage de flux (34) commun avant la forme d'un auvent est attribué à cette/ces ouverture(s) d'échappement (13) et cet élément s'étend d'une paroi frontale (3 ou 4) à ou en direction de l'autre paroi frontale (4 ou 3) et recouvre soit les zones partielles de la paroi circonférentielle extérieure (5) ou l'ensemble de la paroi circonférentielle extérieure (5) du silencieux principal (2).

14. Ligne d'échappement selon la revendication 4, **caractérisée par le fait que** la chambre d'échappement (8), dans le cas où une/des ouverture(s) d'échappement est/sont réalisée(s) dans une zone partielle (33) de la paroi frontale (3) côté admission des gaz d'échappement du silencieux principal (2), est cloisonnée par une ou plusieurs parois intermédiaires longitudinales (35) par rapport à la chambre d'admission (35) et s'étend avec la chambre partielle (8/2) délimitée de cette manière jusqu'à l'/les ouverture(s) d'échappement (13) réalisée(s) dans la paroi frontale.

15. Ligne d'échappement selon la revendication 1, **caractérisée par le fait que**, parallèlement à l'axe par rapport à son axe longitudinal et par rapport l'un à l'autre, un ou plusieurs catalyseur(s) à oxydation (15) et, le cas échéant, un catalyseur à hydrolyse (16) sont montés dans le silencieux en amont (14) de telle manière qu'il existe un certain espace entre leur carter (19, 21) et la paroi frontale voisine côté admission et côté échappement du silencieux en amont (14).

16. Ligne d'échappement selon la revendication 1, **caractérisée par le fait que**, dans le silencieux en amont (14), un ou plusieurs catalyseur(s) à oxydation (15) et, le cas échéant, également un catalyseur à hydrolyse (16) sont montés en position horizontale parallèlement à l'axe l'un par rapport à l'autre et avec leur axe longitudinal à un angle aigu par rapport à l'axe longitudinal du silencieux en amont.

17. Ligne d'échappement selon la revendication 15, **caractérisée par le fait que** le silencieux en amont (14) est délimité à l'extérieur par une paroi frontale (22) avant, une paroi frontale (23) arrière et une paroi circonférentielle extérieure (25) et que l'intérieur du silencieux en amont (14) est divisé par une paroi intermédiaire (26) étanche aux gaz en une chambre d'admission (27) et une chambre d'échappement (28), auquel cas une tubulure (29) raccordée à la paroi frontale (22) débouche dans la chambre d'admission (27) et à cette tubulure est raccordé(e) soit une conduite collectrice des gaz d'échappement, soit un collecteur d'échappement raccordé à celle-ci, soit la tubulure d'échappement d'une turbine à gaz d'échappement d'un turbocompresseur à gaz d'échappement, soit une partie de la conduite d'échappement raccordé à cette dernière et auquel cas un ou les catalyseurs à oxydation (15, 16) est/sont fixé(s) de manière stable à l'intérieur du silencieux en amont par la paroi intermédiaire (26) et, le cas échéant, par une paroi de soutien (31) supplémentaire non étanche aux gaz, et auquel cas une tubulure (30) ou une partie de la conduite d'échappement (1/1) conduisant au silencieux principal (2) sort de la paroi frontale (23) délimitant la chambre d'échappement (28).

18. Ligne d'échappement selon une des revendications 1 et 17, **caractérisée par le fait que** le silencieux en amont (14) est garni au minimum au niveau de la chambre d'échappement (28) au moins partiellement d'un matériau insonorisant (36).

19. Ligne d'échappement selon la revendication 4, **caractérisée par le fait que** le silencieux principal (2) est garni au moins au niveau de la chambre d'échappement (8) partiellement d'un matériau insonorisant (36).

20. Ligne d'échappement selon la revendication 1, **caractérisée par le fait que** les mesures de réduction des nuisances sonores dans le silencieux principal (2) sans section terminale additionnées aux mesures de réduction des nuisances sonores dans le catalyseur en amont (14) fournissent un effet de réduction totale des nuisances sonores, lequel satisfait aux valeurs légales d'émissions sonores.
